# EUROPEAN PATENT APPLICATION

(11) **EP 4 481 465 A1**
(43) Date of publication of application: **25.12.2024**
(21) Application number: 22927398.2
(22) Date of filing: 21.02.2022
(51) Int. Cl.: G02B 27/01, G02B 27/28, G02B 5/30

(54) **HEAD-UP DISPLAY**

(71) Applicant: LG Electronics Inc., Yeongdeungpo-gu Seoul 07336 (KR)
(72) Inventor: KIM, Youngjin, Seoul 06772 (KR); LIM, Jaehyuk, Seoul 06772 (KR); KWON, Yunyoung, Seoul 06772 (KR); LEE, Kyoungil, Seoul 06772 (KR)
(74) Representative: Schornack, Oliver
(86) International application number: PCT/KR2022/002514
(87) International publication number: WO 2023/157998

(57) **Abstract**

A head-up display comprises: a housing having an inner space formed therein and disposed below a wind shield; an imaging instrument accommodated in the inner space and configured to emit a first linear polarized light in a first direction; a polarized mirror having a transmission area through which the first linear polarized light passes and a polarized light reflection area for reflecting a second linear polarized light in a second direction orthogonal to the first direction; and a phase delay mirror spaced apart from the polarized mirror and configured to phase-convert, to the second linear polarized light, the first linear polarized light which has passes through the transmission area, wherein at least a part of the polarized mirror is located between the imaging instrument and the phase delay mirror, a front surface and a rear surface of the polarized mirror are not in parallel to each other, and the thickness of the upper end of the polarized mirror may be thicker or thinner than the thickness of the lower end of the polarized mirror.

## Description

### [Technical Field]

The present disclosure relates to a head-up display, and more specifically, to a head-up display that may be installed in a vehicle.

### [Background Art]

A head-up display is a device installed in a vehicle and emits image light toward the windshield of the vehicle. A head-up display for a vehicle may display various information, including driving information, while the vehicle is driving.

A head-up display comprises a display panel that generates and outputs image light, and at least one mirror that reflects the image light generated by the display panel.

Image light generated from the display panel may be incident on the windshield of the vehicle by the mirror, and the driver may perceive a virtual image of the position in front of the windshield.

When the head-up display comprises two image sources, two virtual images may be formed, and in this case, the convenience of the head-up display for vehicles may be increased.

The head-up display comprises one image source, but is capable of forming two virtual images by forming two optical paths with different total lengths of the optical paths, and a head-up display for a vehicle that uses one image source to form two optical paths is disclosed in Korean Patent Publication No. 10-1909374 B1 (Published on October 17, 2018).

The head-up display for a vehicle comprises an image source that emits linearly polarized light in a first direction; a prism that refracts some of the linearly polarized light emitted from the image source; an electric polarization conversion element that transmits another part of the linearly polarized light emitted from the image source when turned off, and converts another part of the linearly polarized light emitted from the image source by half-wavelength into linearly polarized light in a second direction orthogonal to the first direction when turned on; a first reflection mirror that reflects light to the windshield of the vehicle; a polarization reflection mirror disposed to be spaced apart from the first reflection mirror, reflecting linearly polarized light in the first direction and transmitting linearly polarized light in the second direction; and a second reflection mirror disposed to be spaced apart from the polarization reflection mirror and reflecting light transmitted through the polarization reflection mirror to the polarization reflection mirror, and the second reflection mirror comprises a flat mirror which is disposed to face the polarization reflection mirror.

Japanese Unexamined Patent Publication No. 2019-78784 (published on May 23, 2019) discloses a virtual image display device, which displays a virtual image so that the image may be viewed by projecting an image on a projection part, and the device comprises a polarization part that reflects polarized light in a first direction and simultaneously transmits polarized light in a second direction orthogonal to the first direction, and an image light emitting part that sends display light of the image toward a side of the polarization part, a reflection part that reflects the display light from a side of the image emitting part via the polarization unit back toward the polarization part and constitutes a reciprocating optical path that reciprocates the display light between the polarization part and the reflection part; and a quarter-wave plate installed in the reciprocating optical path and guiding the display light to a side of the projection part by the polarization part on the return path, and converting the polarization direction of the display light.

### [Disclosure]

### [Technical Problem]

An object of this embodiment is to provide a head-up display that may be compact and improve image performance.

### [Technical Solution]

A head-up display according to the present embodiment comprises a housing formed with an inner space inside and disposed below a windshield; an imaging device accommodated in the inner space and emitting first linearly polarized light having a first direction; a polarization mirror having a transmission area through which the first linearly polarized light transmits and a polarization reflection area through which a second linearly polarized light having a second direction perpendicular to the first direction is reflected; and a phase retardation mirror spaced apart from the polarization mirror and phase-converting the first linearly polarized light transmitted through the transmission area into the second linearly polarized light, in which at least a portion of the polarization mirror may be located between the imaging device and the phase retardation mirror, a front surface and a rear surface of the polarization mirror may be not parallel, and an upper end thickness of the polarization mirror may be thicker or thinner than a lower end thickness of the polarization mirror.

The polarization reflection area may surround an edge of the transmission area.

The polarization reflection area may comprise a processed portion formed on a surface of the polarization mirror facing the imaging device.

The processed portion may be formed in a closed-loop cross-sectional shape.

The processed portion may comprise an etched surface on a surface of the polarization mirror facing the imaging device.

The processed portion may comprise a black painted surface on a surface of the polarization mirror facing the imaging device.

As an example of the head-up display, the imaging device may be located in front of the polarization mirror, and the polarization mirror may be located in front of the phase retardation mirror.

As other example of the head-up display, the phase retardation mirror may be located in front of the polarization mirror, and the imaging device may be located behind the polarization mirror.

A shape of the polarization mirror is a wedge shape, and a thickness of the wedge shape gradually becomes thinner.

A left end thickness of the polarization mirror and a right end thickness of the polarization mirror may be thicker than the central portion thickness of the polarization mirror.

The polarization mirror may have a concave or flat surface facing the phase retardation mirror.

The polarization mirror has a convex or flat surface facing the imaging device.

The phase retardation mirror has a concave or flat surface facing the polarization mirror.

### [Advantageous Effect]

According to this embodiment, at least a portion of the image generated by the light reflected from the rear surface of the polarization mirror and then reflected by the windshield and the image generated by the light reflected from the front surface of the polarization mirror and then reflected by the windshield overlap and thus double images may be improved and clear images may be provided.

In addition, the etched surface on the side of the polarization mirror facing the imaging device or the black painted surface on the side facing the imaging device among the polarization mirrors causes reflections in areas other than the transmission area, the occurrence of problems such as double images that deteriorate image performance may be minimized.

### [Description of Drawings]

FIG. 1 is a view illustrating an example of a head-up display according to this embodiment;
FIG. 2 is a perspective view illustrating an example of a head-up display according to this embodiment;
FIG. 3 is a view illustrating a virtual image formed by an example of a head-up display according to this embodiment;
FIG. 4 is a view illustrating various examples of a polarization mirror according to this embodiment;
FIG. 5 is a longitudinal cross-sectional view of the polarization mirror illustrated in FIG. 1;
FIG. 6 is a cross-sectional view of the polarization mirror illustrated in FIG. 1;
FIG. 7 is a view illustrating a first modified example of an example of a head-up display according to this embodiment;
FIG. 8 is a view illustrating a second modified example of an example of a head-up display according to this embodiment;
FIG. 9 is a view illustrating a third modified example of an example of a head-up display according to this embodiment;
FIG. 10 is a view illustrating an example of a head-up display according to this embodiment saving space in a vehicle;
FIG. 11 is a view illustrating another example of a head-up display according to this embodiment;
FIG. 12 is a view illustrating a first modified example of another example of a head-up display according to this embodiment;
FIG. 13 is a view illustrating a second modified example of another example of a head-up display according to this embodiment;
FIG. 14 is a view illustrating a third modified example of another example of a head-up display according to this embodiment.

### [Best Mode]

Hereinafter, specific embodiments of the present disclosure will be described in detail along with the drawings.

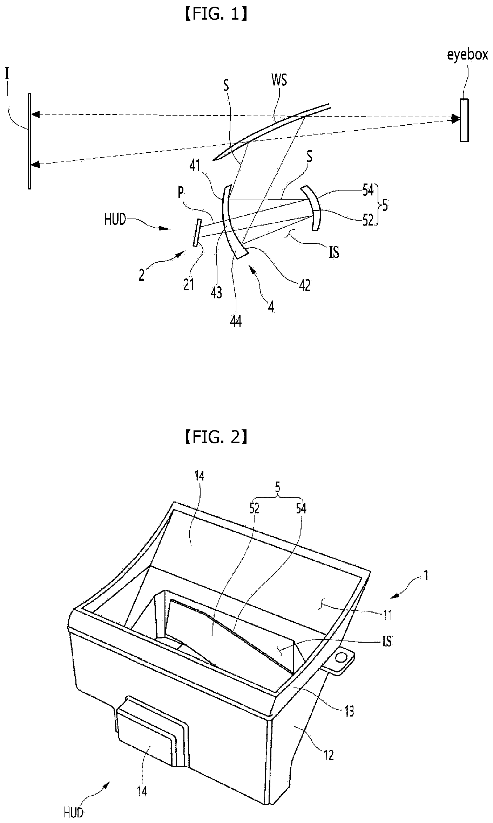

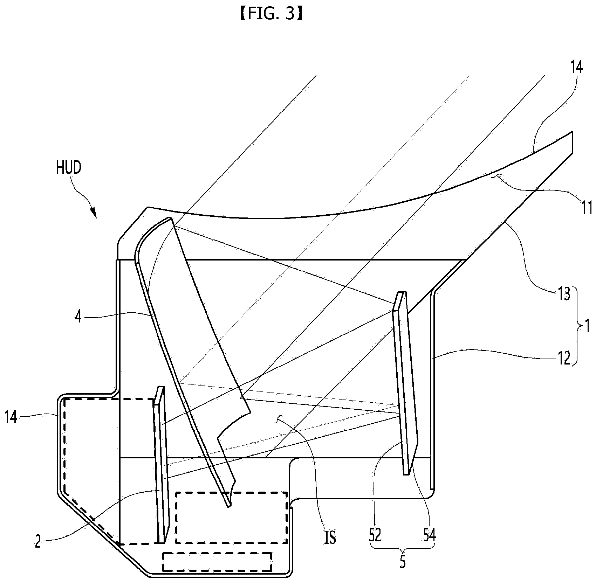

FIG. 1 is a view illustrating an example of a head-up display according to this embodiment, FIG. 2 is a perspective view illustrating an example of a head-up display according to this embodiment, and FIG. 3 is a view illustrating a virtual image formed by an example of a head-up display according to this embodiment;

The head-up display may comprise a housing 1, an imaging device 2, a polarization mirror 4, and a phase retardation mirror 5.

The head-up display HUD is disposed on the vehicle's instrument panel and may emit image light toward the vehicle's wind shield WS, and the driver may perceive a virtual image I of the position in front of the wind shield WS and the head-up display HUD may display various information, including driving information, while the vehicle is driving.

The wind shield WS is a structure that protects the driver and ensures visibility at the front surface of the vehicle, and may reflect light from the head-up display HUD to the driver's eyes eyebox. The driver's eyes eyebox may be defined as the area where light from the head-up display HUD is focused.

In an example of a head-up display, the imaging device 2 may be located in front of the polarization mirror 4, and the polarization mirror 4 may be located in front of the phase retardation mirror 5.

The imaging device 2 may be located in front of the polarization mirror 4 or may be located in front and below the polarization mirror 4.

Not only is the imaging device 2 located in front of the polarization mirror 4, but the imaging device 2 is located in the front lower side of the polarization mirror 4 may be defined as the imaging device located in front of the polarization mirror 4.

The housing 1 may be disposed on the lower side of the wind shield WS. An inner space IS may be formed inside the housing 1. The housing 1 may have an opening 11 formed at the upper portion.

The housing 1 may be composed of a single member, or may be composed of a combination of a plurality of members. The housing 1 may comprise a lower housing 12 with an inner space IS formed and an open upper surface, and an upper cover 13 disposed on the upper portion of the lower housing 12 and having an opening 11.

The housing 1 may further comprise an imaging device cover 14 that covers the imaging device 2. The imaging device cover 14 may be detachably coupled to the lower housing 12. The space formed inside the imaging device cover 14 may be defined as part of the inner space IS.

The housing 1 may further comprise a duster cover 14 covering the opening 11. An example of the dust cover 14 may be a light-transmitting film through which light may transmit.

The imaging device 2 may be accommodated in the inner space IS. The imaging device 2 may emit first linearly polarized light having a first direction.

An example of the imaging device 2 may comprise a display panel that emits image light, and a linear polarizer that linearly polarizes the image light emitted from the display panel into a first linear polarization in a first direction.

The display panel may realize all types of on-screen pixel display methods, and the display panel may emit image light toward a linear polarizer. Examples of display panels may be Liquid Crystal Display (LCD) panels, Organic Light Emitting Diode (OLED) panels, DLP, L-cos, Micro LED, BLU, or the like.

The linear polarizer may be installed inside or outside the display panel.

The linear polarizer may only pass linearly polarized light in the first direction among the image light emitted from the display panel. Non-polarized light may be emitted from the display panel, and the non-polarized light may be polarized in a first direction by a linear polarizer. From a linear polarizer, P-wave linearly polarized light P or S-wave linearly polarized light S may be emitted.

The imaging device 2 may selectively emit P-wave linearly polarized light P or S-wave linearly polarized light S according to the system configuration.

Hereinafter, for convenience of explanation, an example will be given where the first linearly polarized light emitted from the imaging device 2 is P-wave linearly polarized light P and the second linearly polarized light is S-wave linearly polarized light S, but, of course, the reverse case may also be applied.

As illustrated in FIG. 3, the imaging device 2 may be disposed at the lower part of the inner space IS. As illustrated in FIG. 1, the imaging device 2 may comprise an emission surface 21 through which light is emitted. The imaging device 2 can emit first line polarized light P through the emission surface 21.

The imaging device 2 may be disposed obliquely or vertically in the inner space IS. The imaging device 2 may be disposed so that the emission surface 21 faces an inclined direction toward the front lower side or an inclined direction toward the front upper side, as illustrated in FIG. 1. As an example of the imaging device 2, an emission surface 21 may be provided on the rear surface of the imaging device 2.

The imaging device 2 may be smaller in size than the polarization mirror 4 and the phase retardation mirror 5, respectively.

As illustrated in FIG. 3, the polarization mirror 4 may be disposed inside the housing 1 to be accommodated in the inner space IS. The polarization mirror 4 may be spaced apart from the imaging device 2. The polarization mirror 4 may be spaced apart from the phase retardation mirror 5.

At least a portion of the polarization mirror 4 may be located between the imaging device 2 and the phase retardation mirror 5, and the second linearly polarized light S emitted from the polarization mirror 4 may be reflected to the windshield WS.

The polarization mirror 4 may be located in whole or in part between the imaging device 2 and the phase retardation mirror 5.

An example of the polarization mirror 4 may comprise an overlapping area that overlaps the imaging device 2 and the phase retardation mirror 5, and a non-overlapping region that does not overlap the imaging device 2 and the phase retardation mirror 5.

The polarization mirror 4 may comprise a surface 41 facing the imaging device 2 and a surface 42 facing the phase retardation mirror 5.

The polarization mirror 4 may be a surface 41 on which one of the front and rear surfaces faces the imaging device 2, and the other surface of the front and the rear surfaces may be a surface 42 facing the phase retardation mirror 5.

In an example of a head-up display, the front surface of the polarization mirror 4 is a surface (41, surface facing the imaging device) facing the imaging device 2, and the rear surface of the polarization mirror 4 is a surface (42, surface facing phase retardation mirror) facing the phase retardation mirror 5.

As illustrated in FIG. 1, the polarization mirror 4 may have a transmission area 43 and a polarization reflection area 44.

The transmission area 43 may be an area through which the first linearly polarized light P transmits. The transmission area 43 is an area through which light passes and may be defined as an effective area.

The polarization reflection area 44 may be an area that reflects a second linearly polarized light S in a second direction orthogonal to the first direction.

When P-wave linearly polarized light P is generated in the imaging device 2, the P-wave linearly polarized light P may transmit through the transmission area 43, and the S-wave linearly polarized light S generated in the phase retardation mirror 5 may be reflected in the polarization reflection area 44.

Conversely, when S-wave linearly polarized light S is generated in the imaging device 2, the S-wave linearly polarized light S may transmit through the transmission area 43, and the P-wave linearly polarized light P generated in the phase retardation mirror 5 may be reflected in the polarization reflection area 44.

The phase retardation mirror 5 may be disposed inside the housing 1 to be accommodated in the inner space IS. The phase retardation mirror 5 may be spaced apart from the imaging device 2. The phase retardation mirror 5 may be spaced apart from the polarization mirror 4.

The phase of the phase retardation mirror 5 may convert the first linearly polarized light P transmitted through the transmission area 43 into the second linearly polarized light S.

The phase retardation mirror 5 may comprise a phase retarder 52 and a mirror 54.

The phase retarder 52 may be located between the polarization mirror 4 and the mirror 54.

In the phase retardation mirror 5, the phase retarder 52 may be attached to the mirror 54, or the phase retarder 52 may be spaced apart from the mirror 54, and hereinafter, the phase retarder 52 is explained as being attached to the mirror 54.

The phase retarder 52 may face the polarization film 46. An example of the phase retarder 52 may be a 1/4 wavelength phase retarder.

The surface of the phase retardation mirror 5 facing the polarization mirror 4 may be concave or flat.

If the surface of the phase retardation mirror 5 facing the polarization mirror 4 is concave, the entire front surface may be formed to be concave and recessed.

An example of the phase retarder 52 may be disposed in the front surface of the mirror 54.

An example of the mirror 54 may be a mirror with a concave front surface and a convex rear surface.

An example of a head-up display may comprise an imaging device 2 and a tilting device that tilts any one of the polarization mirror 4 and the phase retardation mirror 5.

The tilting device may comprise a driving source such as a motor, and may further comprise a power transmission member such as a gear connected to the driving source.

The tilting device may be connected to only one of the imaging device 2, the polarization mirror 4, and the phase retardation mirror 5 and may be provided to the imaging device 2, the polarization mirror 4, and the phase retardation mirror 5, respectively.

When at least one of the imaging device 2, the polarization mirror 4, and the phase retardation mirror 5 is tilted (rotated), a uniform image may be provided to both tall and short drivers. An example of a head-up display may further comprise a sensor capable of measuring the driver's sitting height, and may drive a tilting device according to the value sensed by the sensor.

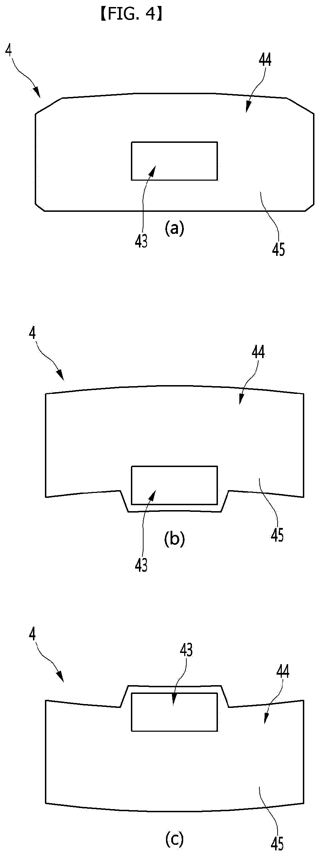

FIG. 4 is a view illustrating various examples of a polarization mirror according to this embodiment.

The polarization reflection area 44 may surround the edge of the transmission area 43. The transmission area 43 may be an inner area surrounded by the polarization reflection area 44, and the polarization reflection area 44 may be an outer area located outside the inner area.

The transmission area 43 may be defined as an effective area through which light passes when light from the imaging device 2 is incident on the polarization mirror 4, and it is desirable to specially process the parts excluding this effective area to prevent light reflection.

The polarization reflection area 44 may comprise a processed portion 45 formed on the surface 41 (see FIG. 1) of the polarization mirror 4 facing the imaging device 2. The processed portion 45 may comprise an etched surface on the surface 41 facing the imaging device 2, or may comprise a black painted surface on the surface of the polarization mirror 4 facing the imaging device 2. The processed portion 45 may be formed in a closed loop cross-sectional shape on the surface of the polarization mirror 4 facing the imaging device 2.

This processed portion 45 may improve problems such as double images, which deteriorate image performance due to reflection occurring in surfaces other than the transmission area 43.

FIG. 4 (a) is an example in which the effective area is located approximately in the center of the polarization mirror 4, FIG. 4 (b) is an example in which the effective area is located lower than in FIG. 4 (a), and FIG. 4 (b) is an example in which the effective area is located higher than in the case in FIG. 4 (a).

The effective area may be determined according to the height or position of the imaging device 2, and the polarization mirror 4 may be different according to the height or position of the imaging device 2.

The area of the polarization mirror 4 in which the processed portion 45 is not formed may be defined as the transmission area 43, and the area of the polarization mirror 4 other than the transmission area 43 may be defined as the polarization reflection area 44.

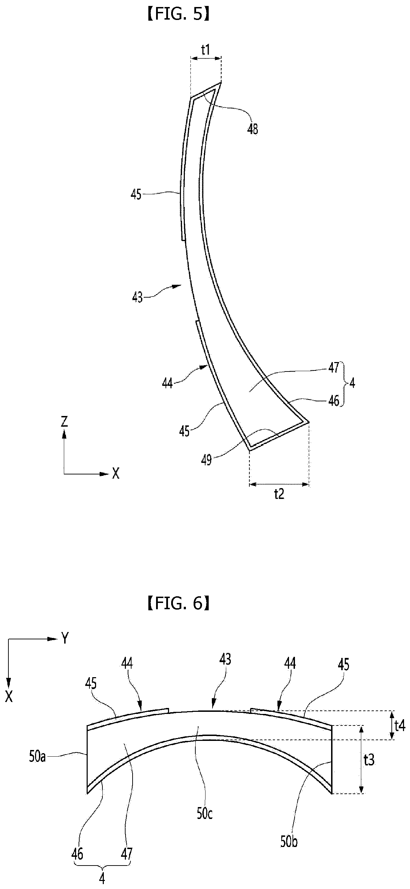

FIG. 5 is a longitudinal cross-sectional view of the polarization mirror illustrated in FIG. 1, and FIG. 6 is a cross-sectional view of the polarization mirror illustrated in FIG. 1.

The polarization mirror 4 may comprise a polarization film 46 and a lens 47 on which the polarization mirror 45 is disposed, and the processed portion 45 may be formed in a partial area of the front surface of the lens 47.

An area of the lens 47 where the processed portion 45 is not formed may be a transmission area 43, and an area of the lens 47 where the processed portion 45 is formed may be a reflection area.

The front surface of the polarization mirror 4 may be the surface of the lens 47 where the processed portion 45 is formed, and the rear surface of the polarization mirror 4 may be the rear surface of the polarization film 46.

The front surface of the polarization mirror 4 may be convex, and the rear surface of the polarization mirror 4 may be concave.

The second linearly polarized light S generated from the phase retardation mirror 5 may be reflected from the front and rear surfaces of the lens 47, respectively.

In the polarization mirror 4, an image by light reflected by the windshield WS after the lens 47 is reflected from the rear surface, and an image by the light reflected by the windshield WS after the lens 47 is reflected from the front surface may be formed to overlap each other.

The thickness of the polarization mirror 4 in the vertical direction Z and the thickness of thereof in the left and right directions Y may not be constant.

The front and rear surfaces of the polarization mirror 4 are not parallel, and the thickness t1 of the upper end 48 of the polarization mirror 4 may be different from the thickness t2 of the lower end 49 of the polarization mirror 4.

The polarization mirror 4 may have a wedge shape. The polarization mirror 4 may have a wedge shape in the vertical direction. The polarization mirror 4 may have a wedge shape, and a thickness of the wedge shape gradually becomes thinner.

The thickness t1 of the upper end 48 of the polarization mirror 4 illustrated in FIGS. 1 and 5 may be thinner than the thickness t2 of the lower end 49. The polarization mirror 4 illustrated in FIGS. 1 and 5 may be formed in a shape whose thickness becomes thinner as it goes from the lower end 49 to the upper end 48, and in this case, the image by the light reflected by the windshield WS after the lens 47 is reflected from the rear surface and the image by the light reflected by the windshield WS after the lens 47 is reflected from the front surface may at least partially overlap.

As illustrated in FIG. 6, the thickness of the polarization mirror 4 may not be constant in the left and right direction Y. The thickness of the left end 50a of the polarization mirror 4 and the thickness of the right end 40b of the polarization mirror 4 may be different from the thickness t4 of the central portion 50c of the polarization mirror 4.

The thickness t3 of the left end 50a of the polarization mirror 4 and the thickness t3 of the right end 40b of the polarization mirror 4 may be thicker than the thickness t4 of the central portion 50c of the polarization mirror 4.

The polarization mirror 4 may be symmetrical in the left and right direction Y, or the polarization mirror 4 may also be asymmetrical.

When the polarization mirror 4 is asymmetric, the thickness of the left end 50a of the polarization mirror 4 and the thickness of the right end 40b of the polarization mirror 4 may be different, and the thickness of the left end 50a of the polarization mirror 4 and the thickness of the right end 40b of the polarization mirror 4 may each be thicker than the thickness t4 of the central portion 50c of the polarization mirror 4.

An example of the polarization mirror 4 may be a concave mirror with a concave rear surface, and the radius of curvature of the front surface may be different from the radius of curvature of the rear surface.

The surface 42 of the polarization mirror 4 facing the phase retardation mirror 5 may be concave.

The radius of curvature of the front surface of the polarization mirror 4 may be larger than the radius of curvature of the rear surface of the polarization mirror 4.

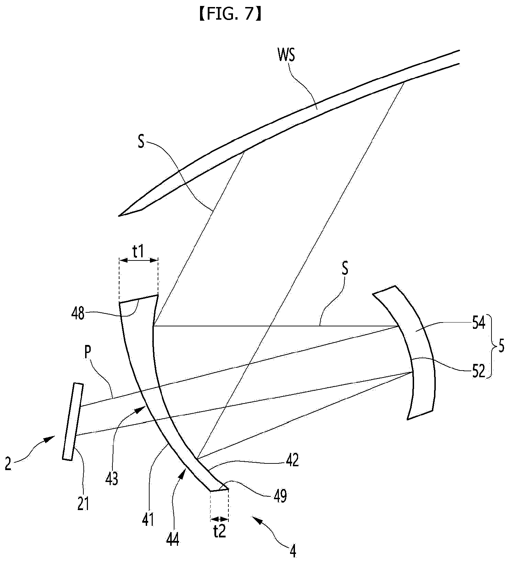

FIG. 7 is a view illustrating a first modified example of an example of a head-up display according to this embodiment.

In the first modified example of an example of the head-up display, the configuration other than the polarization mirror 4 may be the same as the configuration of an example of the head-up display illustrated in FIGS. 1 to 3, and the description of the housing 1, the imaging device 2, and the phase retardation mirror 5 is omitted to avoid redundant description.

In the head-up display illustrated in FIG. 7, the thickness t1 of the upper end 48 of the polarization mirror 4 may be thicker than the thickness t2 of the lower end 49 of the polarization mirror 4. In this case, the polarization mirror 4 may be formed in a shape whose thickness increases from the lower end 49 to the upper end 48.

In the polarization mirror 4 illustrated in FIG. 7, at least part of an image by light reflected by the windshield WS after the lens 47 is reflected from the rear surface and an image by light reflected by the windshield WS after the lens 47 is reflected from the front surface may overlap.

In the polarization mirror 4 illustrated in FIG. 7, other configurations except that the thickness t1 of the upper end 48 is thicker than the thickness t2 of the lower end 49 may be the same as the polarization mirror 4 illustrated in FIGS. 1 and 3 to 6, and detailed description thereof will be omitted to avoid redundant description.

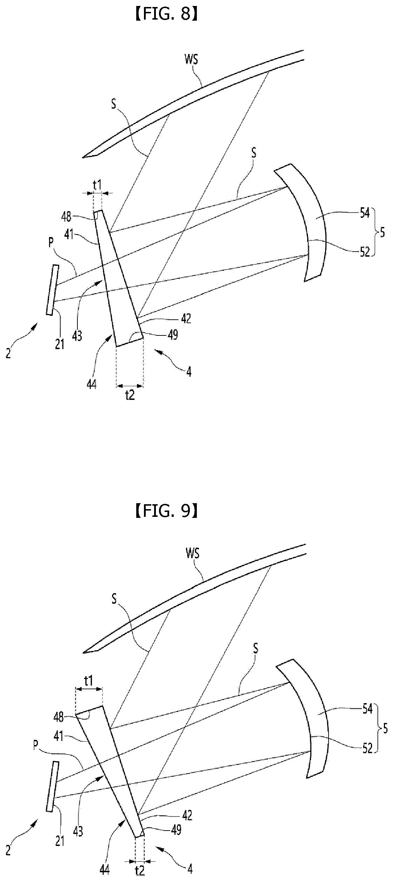

FIG. 8 is a view illustrating a second modified example of an example of a head-up display according to this embodiment.

In the second modified example of an example of the head-up display, the configuration other than the polarization mirror 4 may be the same as the example of the head-up display illustrated in FIGS. 1 to 3, and descriptions of the housing 1, the imaging device 2, and the phase retardation mirror 5 are omitted to avoid redundant explanation.

In the head-up display illustrated in FIG. 8, the surface 42 of the polarization mirror 4 facing the phase retardation mirror 5 may be a flat surface.

The front and rear surfaces of the polarization mirror 4 may be flat surfaces that are neither concave nor convex.

The thickness t1 of the upper end 48 of the polarization mirror 4 may be thinner than the thickness t2 of the lower end 49 of the polarization mirror 4. The polarization mirror 4 illustrated in FIG. 5 may be formed in a shape whose thickness becomes thinner from the lower end 49 to the upper end 48.

The polarization mirror 4 may be formed in a shape whose thickness becomes thinner linearly from the lower end 49 to the upper end 48.

FIG. 9 is a view illustrating a third modified example of an example of a head-up display according to this embodiment.

In the third modified example of an example of a head-up display, the configuration other than the polarization mirror 4 may be the same as the example of the head-up display illustrated in FIGS. 1 to 3, and descriptions of the housing 1, the imaging device 2, and the phase retardation mirror 5 are omitted to avoid redundant explanation.

In the head-up display illustrated in FIG. 9, the front and rear surfaces of the polarization mirror 4 may be flat without being concave or convex, and the thickness t1 of the upper end 48 may be thicker than the thickness t2 of the lower end 49. The polarization mirror 4 illustrated in FIG. 9 may be formed in a shape whose thickness increases from the lower end 49 to the upper end 48.

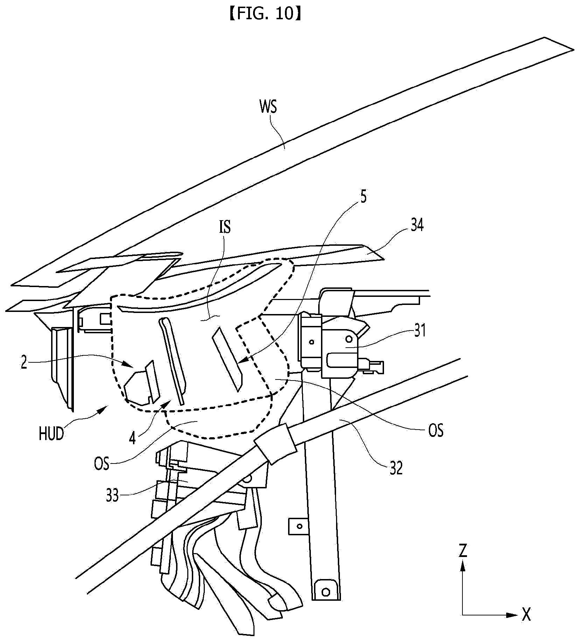

FIG. 10 is a view illustrating an example of a head-up display according to this embodiment saving space in a vehicle.

As illustrated in FIG. 10, an example of a head-up display may be assembled to a frame 31 installed in a vehicle and may be spaced apart from the steering 32 and the brake 33. An example of a head-up display may be disposed in a space formed below the dashboard skin 34.

One example of a head-up display may reduce the overall height (length in the vertical direction) and occupy a relatively small volume when mounted in a vehicle.

As an example, the head-up display may increase the degree of freedom of the space formed below the dashboard skin 34.

A space OS may be secured between an example of the head-up display and the steering 32 and between an example of the head-up display and the brake 33 by using the example of the head-up display.

The polarization mirror 4 functions to transmit and reflect light, and when double or triple images are generated by the polarization mirror (4), image performance may deteriorate.

As in this embodiment, when the wedge-shaped polarization mirror 4 is applied, double and triple images may be minimized, and degradation of image performance provided by the head-up display may be minimized.

Hereinafter, the optical path of an example of a head-up display will be described as follows.

The imaging device 2 may emit first linearly polarized light P, and the first linearly polarized light P emitted from the imaging device 2 passes through the transmission area 43 of the polarization mirror 4 and then may be incident on a phase retardation mirror 5.

The phase retardation mirror 5 may phase retard and reflect the first linearly polarized light P and convert it into the second linearly polarized light S, and the second linearly polarized light S may be incident on the polarization mirror 4.

The second linearly polarized light S incident on the polarization mirror 4 may be reflected by the polarization reflection area 44, and the second linearly polarized light S reflected by the polarization mirror 4 is transmitted to the windshield WS, and the driver may recognize the virtual image I of the position in front of the windshield WS.

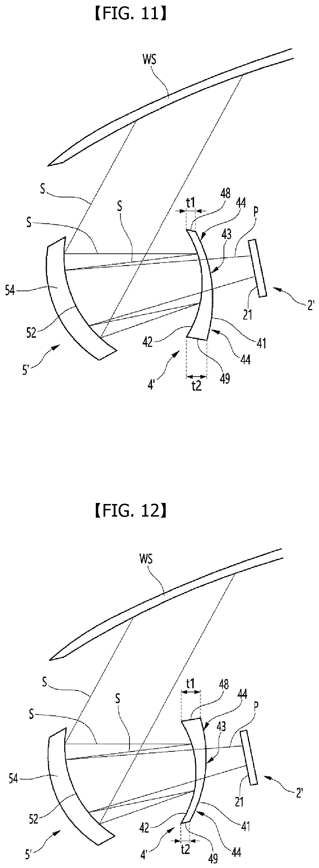

FIG. 11 is a view illustrating another example of a head-up display according to this embodiment.

In another example of a head-up display, as illustrated in FIG. 11, the imaging device 2' may be located behind the polarization mirror 4', and the phase retardation mirror 5' may be located in the front of the polarization mirror 4'.

The imaging device 2' may emit the first linearly polarized light P from behind the polarization mirror 4' toward the polarization mirror 4'. The front surface of the imaging device 2' may be an emission surface 21 through which light is emitted, and the imaging device 2' may emit the first line polarized light P through the emission surface 21.

Except for the configuration in which the imaging device 2' is located behind the polarization mirror 4' and the configuration in which the front surface of the imaging device 2' is the emission surface 21, it is the same as or similar to an example of the head-up display illustrated in FIGS. 1 and 3, and a detailed description thereof will be avoided to avoid redundant explanation.

The polarization mirror 4' may be located in front of the imaging device 2', and the first linearly polarized light P emitted from the imaging device 2' passes through the transmission area 43 of the polarization mirror 4', and may be converted into secondary linear polarization S by the phase retardation mirror 5'.

The second line polarized light S converted in the phase retardation mirror 5' may be incident on the polarization mirror 4' and reflected by the polarization reflection area 44, and then may be reflected back to the windshield WS in the phase retardation mirror 5'.

The rear surface of the polarization mirror 4' may face the imaging device 2', and the front surface of the polarization mirror 4 may face the phase retardation mirror 5'.

The polarization mirror 4' may be a processed portion in which a portion of the rear surface is etched or painted black, and the area in which such processed portion is not formed may be defined as a transmission area 43, and the area in which the processed portion is formed may be defined as a polarization reflection area 44.

The thickness t1 of the upper end 48 of the polarization mirror 4' may be thinner than the thickness t2 of the lower end 49 thereof.

Except for the configuration in which the polarization mirror 4' is located in front of the imaging device 2' and the configuration in which the rear surface of the polarization mirror 4' comprises a processed portion, it is the same or similar to an example of the head-up display illustrated in FIGS. 1 and 3, and detailed description thereof is avoided to avoid redundant explanation.

The phase retardation mirror 5' may be located in front of the polarization mirror 4' and may comprise a phase retarder 52 and a mirror 54, where the phase retarder 52 may be disposed on the rear surface of the mirror 54.

Except for the configuration in which the phase retardation mirror 5' is located in front of the polarization mirror 4' and the configuration in which the phase retarder 52 is disposed on the rear surface of the mirror 54, it is the same or similar to an example of the head-up display illustrated in FIGS. 1 and 3, and detailed description thereof is avoided to avoid redundant description.

FIG. 12 is a view illustrating a first modified example of another example of a head-up display according to this embodiment.

In the first modified example of another example of the head-up display, the configuration other than the polarization mirror 4' may be the same as another example of the head-up display illustrated in FIG. 11, and descriptions of the housing, imaging device 2', and phase retardation mirror 5' are omitted to avoid redundant explanation.

In the head-up display illustrated in FIG. 12, the thickness t1 of the upper end 48 of the polarization mirror 4' may be thicker than the thickness t2 of the lower end 49 of the polarization mirror 4'. In this case, the polarization mirror 4' may be formed in a shape whose thickness increases from the lower end 49 to the upper end 48.

In the polarization mirror 4' illustrated in FIG. 12, except that the thickness t1 of the upper end 48 is thicker than the thickness t2 of the lower end 49, other configurations may be the same as the polarization mirror 4' illustrated in FIG. 11, and the detailed description is omitted to avoid duplicate explanation.

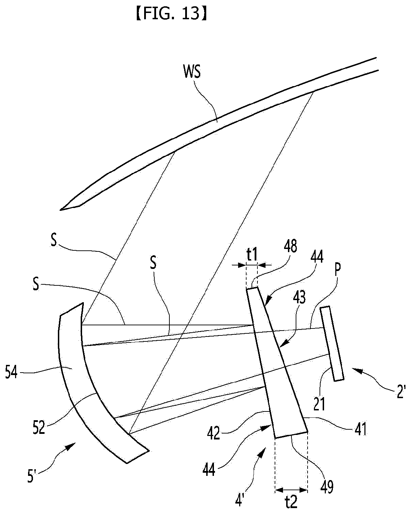

FIG. 13 is a view illustrating a second modified example of another example of a head-up display according to this embodiment.

In the head-up display illustrated in FIG. 13, the configuration other than the polarization mirror 4' may be the same as another example of the head-up display illustrated in FIG. 11, and description of the housing, imaging device 2', and phase retardation mirror 5' will be omitted to avoid redundant explanation.

In the head-up display illustrated in FIG. 13, the surface 42 of the polarization mirror 4' facing the phase retardation mirror 5' may be flat. The front and rear surfaces of the polarization mirror 4' may be flat surfaces that are neither concave nor convex.

The thickness t1 of the upper end 48 of the polarization mirror 4' may be thinner than the thickness t2 of the lower end 49 of the polarization mirror 4'. The polarization mirror 4' illustrated in FIG. 13 may be formed in a shape whose thickness becomes thinner from the lower end 49 to the upper end 48.

The polarization mirror 4' may be formed in a shape whose thickness becomes thinner linearly from the lower end 49 to the upper end 48.

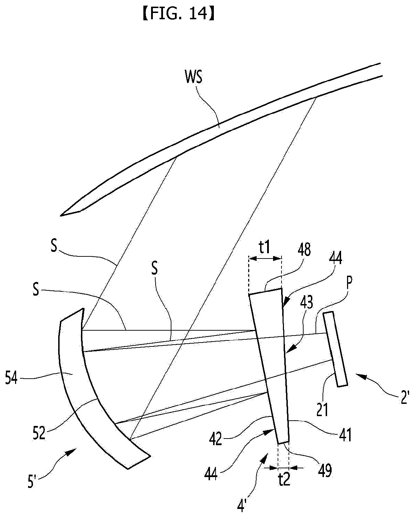

FIG. 14 is a view illustrating a third modified example of another example of a head-up display according to this embodiment.

In the head-up display illustrated in FIG. 14, the configuration other than the polarization mirror 4' may be the same as other examples of the head-up display illustrated in FIG. 11, and descriptions of the housing 1, the imaging device 2, and the phase retardation mirror 5 are omitted to avoid redundant explanation.

In the head-up display illustrated in FIG. 14, the front and rear surfaces of the polarization mirror 4' may be flat, with no concave or convex surface, and the thickness t1 of the upper end 48 may be thicker than the thickness t2 of the lower end 49. The polarization mirror 4 illustrated in FIG. 14 may be formed in a shape that increases in thickness from the lower end 49 to the upper end 48.

The above description is merely an illustrative explanation of the technical idea of the present disclosure, and various modifications and variations will be possible to those skilled in the art without departing from the essential characteristics of the present disclosure.

Accordingly, the embodiments disclosed in the present disclosure are not intended to limit the technical idea of the present disclosure, but are for illustrative purposes, and the scope of the technical idea of the present disclosure is not limited by these embodiments.

The scope of protection of the present disclosure should be interpreted in accordance with the claims below, and all technical ideas within the equivalent scope should be interpreted as being comprised in the scope of rights of the present disclosure.

## Claims

1. A head-up display comprising:
a housing formed with an inner space inside and disposed below a windshield;
an imaging device accommodated in the inner space and emitting first linearly polarized light having a first direction;
a polarization mirror having a transmission area through which the first linearly polarized light transmits and a polarization reflection area through which second linearly polarized light having a second direction perpendicular to the first direction is reflected; and
a phase retardation mirror spaced apart from the polarization mirror and phase-converting the first linearly polarized light transmitted through the transmission area into the second linearly polarized light,
wherein at least a portion of the polarization mirror is located between the imaging device and the phase retardation mirror,
wherein a front surface and a rear surface of the polarization mirror are not parallel, and
wherein an upper end thickness of the polarization mirror is thicker or thinner than a lower end thickness of the polarization mirror.

2. The head-up display of claim 1,
wherein the polarization reflection area surrounds an edge of the transmission area.

3. The head-up display of claim 1,
wherein the polarization reflection area comprises a processed portion formed on a surface of the polarization mirror facing the imaging device.

4. The head-up display of claim 3,
wherein the processed portion is formed in a closed-loop cross-sectional shape.

5. The head-up display of claim 3,
wherein the processed portion comprises an etched surface on a surface of the polarization mirror facing the imaging device.

6. The head-up display of claim 3,
wherein the processed portion comprises a black painted surface on a surface of the polarization mirror facing the imaging device.

7. The head-up display of claim 1,
wherein the imaging device is located in front of the polarization mirror, and
wherein the polarization mirror is located in front of the phase retardation mirror.

8. The head-up display of claim 1,
wherein the phase retardation mirror is located in front of the polarization mirror, and
wherein the imaging device is located behind the polarization mirror.

9. The head-up display of claim 1,
wherein a shape of the polarization mirror is a wedge shape, and a thickness of the wedge shape gradually becomes thinner.

10. The head-up display of claim 1,
wherein a left end thickness of the polarization mirror and a right end thickness of the polarization mirror are thicker than a central portion thickness of the polarization mirror.

11. The head-up display of claim 1,
wherein the polarization mirror has a concave or flat surface facing the phase retardation mirror.

12. The head-up display of claim 1,
wherein the polarization mirror has a convex or flat surface facing the imaging device.

13. The head-up display of claim 1,
wherein the phase retardation mirror has a concave or flat surface facing the polarization mirror.
